# EUROPEAN PATENT APPLICATION

(11) **EP 4 568 073 A1**
(43) Date of publication of application: **11.06.2025**
(21) Application number: 23383255.9
(22) Date of filing: 05.12.2023
(51) Int. Cl.: H02K 5/04, H02K 7/116

(54) **MODULAR DRIVE FOR A SOLAR TRACKER**

(71) Applicant: Soltec Innovations, S.L., 30500 Molina de Segura (ES)
(72) Inventor: Molina Cano, Alonso, 30500 Molina de Segura (ES); Melón Menéndez, Ignacio, 30500 Molina de Segura (ES)
(74) Representative: Isern Patentes y Marcas S.L.

(57) **Abstract**

The present invention comprises the following components: motor (2); reduction gear system (3), with an input, connected to the motor (2), and an output connectable to a torque element (12) of a solar tracker; electronics (4); and, preferably, power supply (5); optionally, a positioning system to detect the angular position of the solar tracker. The drive (1) is additionally characterised in that it comprises the different components, such as the motor (2), the reduction gear system (3) and electronics (4) in two or more modules (6, 7, 8), each in turn totally or partially delimited by one or more walls (15), where preferably a first module (6) is occupied by the motor (2), a second module (7), different from the first module (6), houses the electronics (4), preferably together with the power supply (5), and a third module (8) contains the reduction gear system (3). The invention simplifies manufacturing, factory and field calibration, logistics, assembly and maintenance, allowing faster disassembly, inspection and replacement of elements.

## Description

### Technical field of the invention

The present invention can be included within the field of solar energy, in particular, in that of solar trackers. More specifically, the object of the invention is a modular drive for a solar tracker.

### Background of the invention (state of the art)

In the solar energy sector in general and, in particular, for photovoltaic use, devices referred to as "trackers" are known which are driven by a drive, to rotate about a non-azimuth axis and, optionally, also about an azimuth axis, pulling one or more solar panels connected to the tracker in its rotation, to provide the panels with a variable orientation throughout the day ("solar tracking"), depending on the relative solar position (height and azimuth).

The aforementioned drive of a solar tracker traditionally includes as components: a worm screw-ring gear type reduction gear; a gear motor; and tracker electronics. The aforementioned components are supplied independently, to be subsequently integrated in the field, where the reduction gear and the gear motor are assembled in the solar tracker in a solidly attached manner, and the electronics independently in different locations depending on the configuration of the tracker.

### Summarised description of the invention

The present invention presents a modular drive for a solar tracker, according to the attached independent claim, which has a more compact configuration than the drives of the state of the art referred to above. In addition, it enables a simplified assembly and, where appropriate, disassembly of modules for repairs or replacements. Other optional additional features are also indicated in dependent claims. In particular, the invention also relates to a solar tracker that includes said drive.

The drive object of the present invention has a modular configuration, which integrates, in the same assembly, both a reduction gear system, as well as its corresponding gear motor, and also the tracker electronics.

The modular configuration of the drive enables the hardware to be shipped, integrated and assembled from the factory, to drive and position the tracker, avoiding the need for assembly in the field, where the means may be more limited. According to a more preferred variant, the drive leaves the factory assembled in a more compact way that favours the transport thereof and that, due to the modular nature, enables some of the components to be easily dissembled and reassembled in an operative position once at the destination.

Furthermore, the proposed modular configuration facilitates control of the solar tracker and measurement of the position (angle of rotation) on the drive itself, which means that independent electronics assembled on the torque tube of the solar tracker are not required. Likewise, the need for cables between fixed assemblies (reduction gear and gear motor) and mobile assemblies (electronics) of the solar tracker is eliminated, since everything becomes a single assembly. In addition, the number of mobile elements in the tracker is reduced (for example, fewer loose cables moving), which provides greater robustness by avoiding damage and wear due to movement. Additionally, logistics are simplified since the entire set is shipped as a single assembly with the different modules integrated from the factory. Furthermore, product sustainability is improved, in addition to CO₂ and environmental impact being reduced. Specifically, by assembling the different modules in a more compact way, transport is optimised, both in terms of mass and volume, such that the transport of the compactly assembled components is less polluting than the transport of the different elements separately. Additionally, shipping the assembled product in a single package, instead of in several packages, facilitates assembly and calibration tasks at destination, reducing the number of steps and improving the safety and ergonomics of the operators, since the entire assembly can be handled and positioned on the structure of the solar tracker by machinery as a single entity, reducing or eliminating the need for repetitive loading movements by operators. Furthermore, the modular configuration of the drive of the invention facilitates access to the various elements, favouring their interchangeability and simplifying maintenance tasks, such as inspection, repair and replacement.

The main application of the drive object of the invention is as a motion actuator and position controller for solar trackers, in particular, photovoltaic solar trackers, although its application could be extended to other fields of the solar energy sector such as, for example, concentrated solar trackers and future tracker designs for the residential or commercial and industrial solar market.

### Brief description of the figures

The advantages mentioned above, as well as other advantages and features of the present invention, will be better understood with reference to the following detailed description of preferred embodiments with reference to the attached figures, which are to be considered by way of illustration and not limitation, in which:
Figure 1 shows a perspective view of the modular drive of the invention connected to a torque shaft of a solar tracker.
Figure 2 shows a cross-sectional view of the modular drive of Figure 1.
Figure 3 shows an exploded view of the modular drive of Figures 1-2.

### List of references:

- 1: Drive
- 2: Motor
- 3: Reduction gear system
- 4: Electronics
- 5: Power supply / Batteries
- 6: First module
- 7: Second module
- 8: Third module
- 9: First groove-type joining means
- 10: First protrusion-type joining means
- 11: Second screw-type joining means
- 12: Torque element / Torque tube
- 13: Ring gear
- 14: Worm screw
- 15: Wall

### Detailed description of a preferred exemplary embodiment of the invention

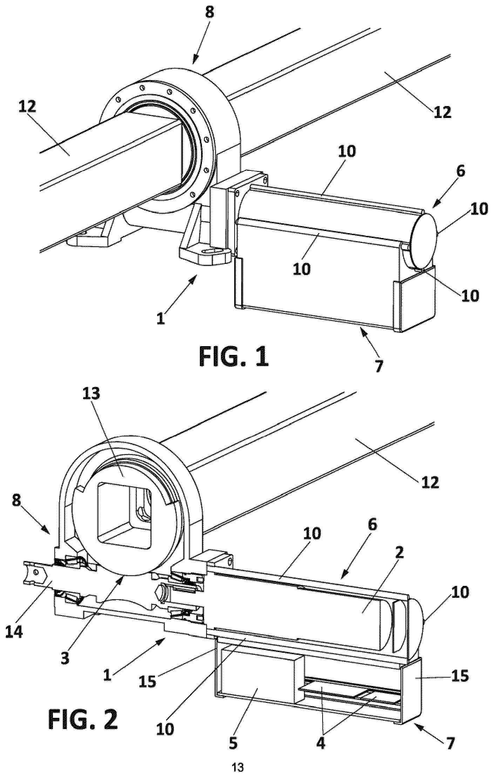

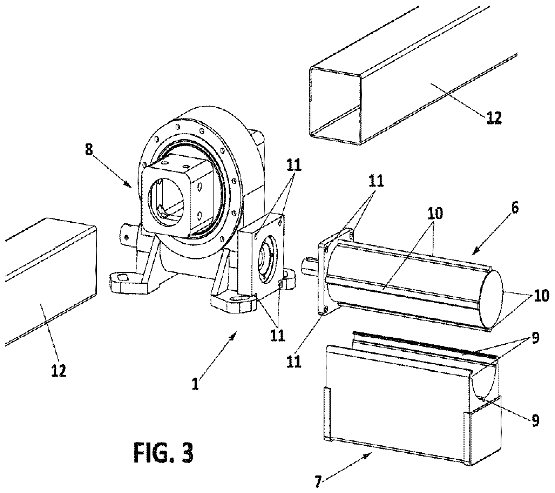

A detailed description is provided below, with the help of the aforementioned attached figures 1-3, of a preferred exemplary embodiment of the modular drive (1) for a solar tracker object of the present invention.

The drive (1) includes: motor (2); reduction gear system (3); electronics (4); and in certain cases, electrical power supply (5), such as batteries (5), for example, rechargeable, or another type of energy source. Moreover, these elements are arranged in two or more different modules (6, 7, 8), as will be explained later, such that the drive (1) can preferably have an outer casing with a variable geometry depending on the assembly configuration of the modules (6, 7, 8) that is implemented in the factory and/or in the field.

According to a first example, the drive (1) has a first module (6) in which the motor (2) is housed, as well as a second module (7), different from the first module (6), and in which the electronics (4) are totally or partially housed, optionally together with the power supply (5). The reduction system (3) can be housed in any of the first (6) and second (7) modules, although, more preferably, as illustrated in Figures 1-3, a third module (8) is also available, which is different from the first module (6) and the second module (7), in which the reduction gear system (3) is housed.

In relation to the above, there are first joining means (9, 10), of a separable type, that join the second module (7), which contains the electronics (4), to the first module (6), which contains the motor (2).

Furthermore, in the case of having the third module (8) that houses the reduction gear system (3), second joining means (11) of a reversible type, are included which fasten the first module (6) to the third module. (8).

According to a preferred example, the first (9, 10) and second (11) joining means enable different assembly positions and/or orientations depending on the needs of each moment, such as, for example:
- for transport (not shown in the figures) where the second module (7) is assembled on the first module (6) with the aim of optimising the geometry of the outer casing so that the drive (1) assembly is more compact, and in this way, it takes up less volume during the logistics process (storage and transportation), and
- for the final installation in the solar tracker, where the second module (7) is assembled under the first module (6) generating a more irregular outer casing geometry, but with the aim of reducing shadows on the solar panels of the solar tracker by having this module in a lower position.

The above entails that the first joining means (9, 10) are configured to enable the second module (7) to be joined selectively in the upper portion or in the lower portion of the first module (6), that is, that, apart from in the second module (7), there may also be first joining means (9, 10) both in the upper portion and in the lower portion of the first module (6).

In relation to the above, it should be clarified that joining means (9, 10, 11) of a separable type is understood as joining means (9, 10, 11) that define a join between the connected modules (6, 7, 8), which can be established and released an indefinite number of times without destroying the join. As examples of joining means (9, 10, 11) of a separable type, these include: screwed means; shape closures (such as rails, dovetails...); etc.; as well as combinations of several of them.

According to the example represented in the figures, the second joining means (11), which join the first module (6), of the motor (2), to the third module (8), of the reduction gear system (3), comprise screwed means. Likewise, the first joining means (9, 10), shown in the figures, connect the second module (7), of the electronics (4), to the first module (6), of the motor (2). As illustrated in the figures, the first joining means (9, 10) may be of the shape closure type, wherein, for example, the first joining means (9, 10) include a combination of grooves (9) and protrusions (10), the protrusions (10) correspondingly arranged in the first module (6) and the grooves (9) in the second module (7), or vice versa, or in combination, with grooves (9) and protrusions (10) both in the first module (6) and in the second module (7).

The components listed above, such as the motor (2), reduction gear system (3), electronics (4), etc., and which in turn are contained in the different modules (6, 7, 8) are described in more detail below. The reduction gear system (3) comprises an input and an output. The input is connected to the motor (2), to drive the reduction gear system (3), while the output is connected to a torque element (12) of the solar tracker, which enables the rotation of the drive (1) to be transmitted and external loads, mainly wind, transmitted by the environment to the solar tracker to be withstood. This torque element (12) can be, for example, a torque tube (12), a torque box (not shown), or equivalent element, as is conventional. In the example represented in the figures, the reduction gear system (3) includes a reduction gear, such as a ring gear (13) and worm screw (14) type, although it may be of other types, such as planetary, etc. Therefore, in this example the motor (2) is connected to the worm screw (14), as an input to the reduction gear system (3), while the ring gear (13) is connected to the torque element (12), as an output. The electronics (4) may include, as is common, control elements, such as control electronics, and power elements, such as power electronics, among others, which may be integrated together on a single PCB (not shown) or, as shown in the figures, in different separate elements, such that they are located sharing space in the same module (6, 7, 8) of the drive (1) or distributed in different modules (6, 7, 8).

Regarding the electronics (4), in particular the control elements, the drive (1) may have components that act as a positioning system, which, when communicated with the electronics (4), allows the angular position of the tracker to be measured and controlled. Various solutions can be adopted for the positioning system. In the present embodiment, it is preferred that the positioning system be coupled (or be couplable) to rotating elements, such as: the motor (2), the reduction gear system (3), or the torque element (12) of the tracker itself in which the drive (1) of the invention is intended to be installed. More specifically, the rotating system may include, for example, a referencing element, such as an encoder (not shown) or, more simply, a Hall effect sensor, linked to the motor (2) or the reduction gear system (3), or to the torque element (12), without the need to install external components in mobile parts of the tracker, although, due to the high gear ratio provided by the reduction gear system (3), a particularly precise encoder solution, or similar element, is not necessary, so the referencing element may be of low resolution. To achieve the same effect, there can be one or more accelerometers (not shown), located in the reduction gear system (3) or in the torque element (12).

To mitigate the effects of electromagnetic interaction between the elements housed in the modules (6, 7, 8), especially the interaction of the motor (2) with elements such as the power supply (5) and the electronics (4) as much as possible, the invention provides for various solutions, focused on both the configuration and the arrangement of the affected elements. On the one hand, it is intended that the electronics (4), in particular, the control, power, communications electronics, etc., can be configured to be protected against electromagnetic noise generated by the motor (2). Specifically, the electronics (4) may include protective elements, such as one or more capacitors (not shown). On the other hand, it is also intended that the affected elements, for example, the electronics (4) and the motor (2), can be found in different modules (6, 7, 8), independent and connectable to each other, such that they occupy independent volumes and are separated by several walls (15) as explained below. In this way, it is justified that the different components of the drive (1) are arranged such that the motor (2) occupies the first module (6) of the drive (1), independent from the second module (7) in which the electronics (4) are totally or partially located, preferably together with the power supply (5), as well as the reduction gear system (3) being located in a third module (8).

In light of the above, it can be seen in the figures that the first module (6), the second module (7) and/or the third module (8) are separated by one or more walls (15) that enable spaces to be separated into independent volumes and, in addition, provide the required level of leak-tightness to each module (6, 7, 8), such that the entry of fluids, for example, water, and unwanted external agents, such as dust, dirt, etc., is prevented. Likewise, these walls (15) enable the different modules (6, 7, 8) to be thermally isolated from internal heat sources, such as, for example, the motor (2) and the electronics (4) when they operate in a maximum power regime, in addition to mitigating the electromagnetic noise produced by the motor (2) on the electronics (4) while it is being actuated. It can also be seen that the elements of the electronics (4) most susceptible to interference are arranged in an area of the second module (7) that is opposite the first module (6), such that they are as far away as possible from the motor (2). Furthermore, it must be indicated that connection points or openings can be found in the walls (15) that constitute the different modules (6, 7, 8) in order to, for example, enable the passage of installations such as cables (not shown). Similarly, the first module (6) and the third module (8) are configured in such a way that they allow the connection between the motor (2) and the reduction system (3) without losing previously mentioned characteristics such as leak-tightness.

Moreover, the modules (6, 7, 8) can incorporate thermal insulation (not shown) to keep the drive components (1) within predetermined temperature ranges, thus avoiding temperatures that, whether cold or hot, could damage the components housed in the modules (6, 7, 8).

## Claims

1. A drive (1) for a solar tracker, **characterised in that** it comprises the following elements:
- motor (2);
- reduction gear system (3), with an input, coupled to the motor (2), and an output connectable to a torque element (12) of a solar tracker or mechanical transmission element;
- electronics (4);
- at least two modules (6, 7, 8) that house the motor (2), the reduction gear system (3) and the electronics (4); and
- joining means (9, 10, 11) to fasten at least two of the modules (6, 7, 8) to each other in a separable manner.

2. The drive (1) for a solar tracker according to claim 1, wherein the electronics (4) include control elements and/or integrated power elements.

3. The drive (1) for a solar tracker according to any of claims 1-2, which additionally includes a positioning system, communicated with the electronics (4), in order to measure and/or control the angular position of the solar tracker.

4. The drive (1) for a solar tracker according to claim 3, wherein the positioning system comprises any of:
- a referencing element, such as an encoder or, more simply, a Hall effect sensor, which is coupled, or is couplable, to a rotating component, such as the motor (2), the reduction gear system (3) or the torque element (12); and
- one or more accelerometers located in one or more rotating components, such as, for example, the reduction gear system (3) or the torque element (12).

5. The drive (1) for a solar tracker according to any of claims 1-4, wherein the reduction gear system (3) includes a reduction gear, such as a ring gear (13) and worm screw (14) type.

6. The drive (1) for a solar tracker according to any of claims 1-5, wherein the modules (6, 7, 8) comprise:
- a first module (6) in which the motor (2) is housed; and
- a second module (7) in which the electronics (4) are housed, at least partially, preferably together with a power supply (5).

7. The drive (1) for a solar tracker according to claim 6, wherein the joining means (9, 10, 11) comprise first joining means (9, 10) that link and/or fasten the second module (7) to the first module (6).

8. The drive (1) for a solar tracker according to any of claims 1-7, wherein the modules (6, 7, 8) additionally comprise a third module (8) in which the reduction gear system (3) is housed.

9. The drive (1) for a solar tracker according to claim 8, wherein the joining means (9, 10, 11) comprise second joining means (11) that link and/or fasten the first module (6) to the third module (8).

10. The drive (1) for a solar tracker according to any of claims 7-9, wherein the second joining means (11) comprise screwed means, and/or the first joining means (9, 10) include a combination of grooves (9) and protrusions (10) arranged correspondingly.

11. The drive (1) for a solar tracker according to any of claims 1-10, wherein the joining means (9, 10, 11) are configured to selectively fasten at least two of the modules (6, 7, 8) to each other in one or more different positions and/or orientations, such as fastening the second module (7) to a lower portion or an upper portion of the first module (6).

12. The drive (1) for a solar tracker according to any of claims 1-11, wherein at least one of the modules (6, 7, 8) is leak-tight, in order to prevent fluids, for example, water or unwanted external agents such as dust, from entering therein.

13. The drive (1) for a solar tracker according to any of claims 1-12, wherein the electronics (4) are arranged in at least one of the modules (6, 7, 8) in such a way that the electromagnetic interference generated by the motor (2) is reduced.

14. The drive (1) for a solar tracker according to any of claims 1-13, wherein the electronics (4) are distributed in several of the modules (6, 7, 8).

15. The drive (1) for a solar tracker according to any of claims 1-14, wherein at least one of the modules (6, 7, 8) incorporates thermal insulation elements to maintain the different components of the drive (1) within a predetermined temperature range.
